# FASCICULE DE BREVET EUROPEEN

(11) **EP 0 490 764 B1**
(45) Date de publication et mention de la délivrance du brevet: **06.03.1996**
(21) Numéro de dépôt: 91403361.8
(22) Date de dépôt: 12.12.1991
(51) Int. Cl.: G01F 1/68

(54) **Capteur semi-conducteur de débit**
Halbleiter-Durchflusssensor
Semi-conductor sensor for flow rate

(30) Priorité: 14.12.1990 FR 9015658
(43) Date de publication de la demande: 17.06.1992
(73) Titulaire: SCHLUMBERGER INDUSTRIES, F-92120 Montrouge (FR)
(72) Inventeur: Chau, Minh-Trang, F-94150 Rungis (FR); Dominguez, Didier, F-92542 Montrouge (FR); Suski, Jan, F-92160 Antony (FR)

(56) Documents cités:
- EP-A- 0 131 318
- WO-A-89/03512
- US-A- 4 680 963

## Description

L'invention concerne un capteur semi-conducteur pour mesurer le débit d'un fluide en écoulement, par exemple un liquide ou un gaz.

D'une manière générale, le principe de l'anémomètre à fil chaud pour mesurer l'écoulement d'un fluide est connu depuis fort longtemps. Plus récemment, il a été proposé de réaliser des capteurs semi-conducteurs basés sur ce principe.

Par exemple, le brevet US-4,680,963 décrit un capteur semi-conducteur intégrant, sur un seul substrat de silicium, une résistance chauffante et des thermomètres associés. La face du substrat qui est soumise à l'écoulement du fluide, est munie en son centre d'une résistance chauffante et à sa périphérie de thermomètres, ces derniers étant isolés de la résistance chauffante par du silicium poreux oxydé. Etant donné que la conductivité thermique du silicium poreux oxydé est jusqu'à 100 fois plus faible que celle du silicium, on évite ainsi les court-circuits thermiques, au niveau du substrat, entre la résistance chauffante et les thermomètres.

Le capteur décrit ci-dessus présente cependant des inconvénients dans la mesure où la résistance chauffante et les thermomètres nécessitent une couche protectrice pour éviter les problèmes d'abrasion, de corrosion et de contamination ionique des circuits implantés pour le chauffage et les mesures de température. La réalisation d'une telle couche soulève cependant plusieurs difficultés. Tout d'abord, elle doit présenter des caractéristiques de dilatation thermique sensiblement identiques à celle du support pour éviter les fluctuations de mesure liées à la contrainte occasionnée par les variations de température. De plus, elle doit présenter une bonne conductivité thermique de manière à ne pas s'opposer au transfert thermique entre la résistance chauffante et le fluide; cette dernière condition présente cependant un inconvénient dans la mesure où elle crée un nouveau pont thermique au niveau de la couche protectrice entre la résistance chauffante et les thermomètres.

L'invention définie dans la revendication 1 a pour objet de remédier à ces inconvénients en proposant une solution efficace et économique.

Avantageusement, la troisième zone est constituée par au moins une tranchée isolante entourant la première zone. Selon un mode particulier de réalisation, la première zone est sensiblement cylindrique, la troisième zone étant annulaire.

En variante, la troisième zone est constituée d'une succession de tranchées en SiO2 séparées par du Si.

Avantageusement, la cavité est pratiquée en regard de la première zone et d'une partie de la troisième zone.
De manière avantageuse, l'interface entre les deuxième et troisième zones est située hors de la cavité.
Dans le cas où la première zone est sensiblement cylindrique et la troisième zone est constituée par au moins une tranchée isolante entourant la première zone, la cavité possède un contour circulaire.

Le substrat ainsi rigidifié et consolidé peut être usiné pour sa bonne adaptation à l'écoulement d'un fluide au regard de la seconde face.

Selon une première variante de réalisation, pour recevoir l'écoulement de fluide, le capteur comporte un évidement pratiqué dans la seconde face du substrat, les trois zones débouchant au même niveau au fond de l'évidement.

Selon un mode particulier de réalisation, l'évidement présente la forme d'une croix centrée sur la première zone et dont une des branches correspond à l'axe d'écoulement du fluide.

Selon une autre variante de réalisation, pour recevoir l'écoulement de fluide, la seconde face du substrat est plane, la seconde face du substrat étant gravée de manière à ce que le substrat possède une épaisseur au plus égale à l'épaisseur de la troisième zone isolante.

La gravure de la seconde face, que ce soit en pratiquant un évidement tel que le fond de l'évidement et la première face du substrat forment une membrane ou en usinant complètement la seconde face pour réduire l'épaisseur du substrat, permet d'avoir une isolation thermique latérale entre les première et seconde zones.

Avantageusement, le capot est en silicium; la liaison entre le capot et la première face du substrat peut consister en un scellement électrostatique par l'intermédiaire d'une fine couche de pyrex.
En variante, la liaison entre le capot et la première face du substrat peut être réalisée par l'intermédiaire d'une couche de siloxane déposée par centrifugation et scellée par pression à une température comprise entre 200°C et 450°C.
L'espace entre le capot et la première face peut être sous vide ou rempli d'un gaz inerte.

La première face du substrat peut avantageusement être munie d'au moins un élément thermométrique disposé dans la première zone.

De préférence, le substrat de silicium est de type P et l'élément chauffant ainsi que les éléments thermométriques sont formés par des composants directement implantés dans la première face dudit substrat.

L'invention et les avantages qu'elle présente seront mieux compris à la lecture de la description détaillée ci-après et en se reportant aux figures, dans lesquelles :
- les figures 1 et 2 représentent respectivement une vue de dessus et une coupe du substrat de silicium identifiant les différentes surfaces masquées pour la réalisation d'un capteur conforme à l'invention;
- la figure 3 représente une coupe du substrat de la figure 1, montrant la zone de silicium poreux oxydé formant la barrière thermique selon la réalisation correspondant aux figures 1 et 2;
- Les figures 4 et 5 représentent respectivement une vue de dessus et une coupe du substrat de silicium identifiant les différentes surfaces masquées pour une variante de réalisation d'un capteur conforme à l'invention;
- La figure 6 représente une coupe du substrat de la figure 4, montrant la variante de réalisation correspondant aux figures 4 et 5.
- La figure 7 représente schématiquement une vue de dessus du substrat après implantation des éléments chauffant et thermométriques;
- La figure 8 représente schématiquement une coupe du substrat de la figure 7 muni de son capôt;
- Les figure 9 et 10 représentent schématiquement et respectivement une vue en perspective et une vue de dessus d'une variante de réalisation d'un capteur selon l'invention;
- La figure 11 représente schématiquement une coupe d'une autre variante de réalisation d'un capteur selon l'invention.

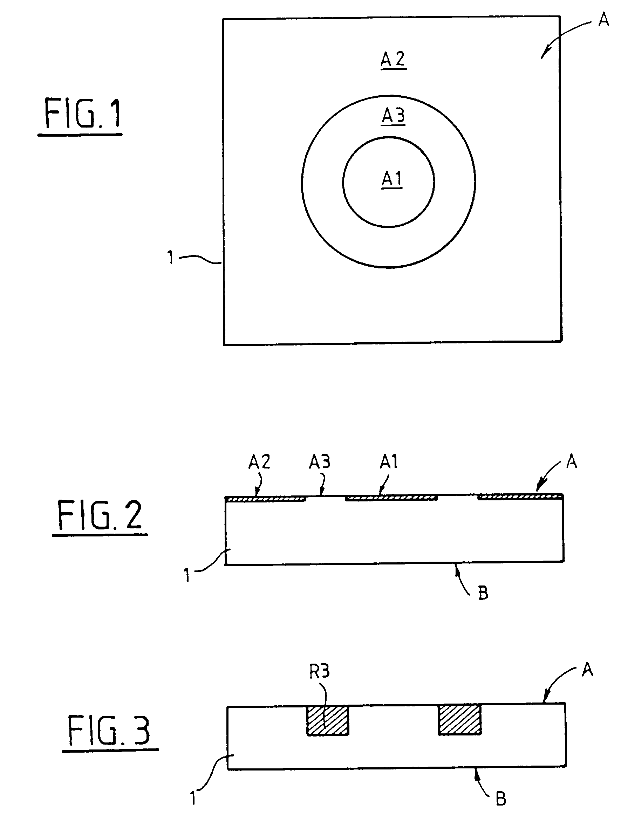

En référence aux figures 1 à 3 décrivant un premier mode de réalisation, le capteur est formé à partir d'un substrat 1 de silicium du type P. Sur la face A du substrat 1, on masque les surfaces circulaire centrale A1 et annulaire extérieure A2 par implantation ionique du type N d'environ 0,3 micron de profondeur, de manière à ne laisser exposée qu'une surface annulaire intermédiaire A3 du type P isolant les surfaces A1 et A2 l'une de l'autre. A titre illustratif, la surface A1 est une surface circulaire d'environ 1 mm de diamètre et la distance entre la surface A1 et A2 est d'environ 0.5 mm.

La face A ainsi masquée du substrat 1 est soumise à une solution d'acide fluorhydrique (HF) et un courant électrique entre la face B du substrat 1 formant anode et la solution d'acide fluorhydrique formant cathode.
Etant donné que cette solution acide attaque uniquement le silicium du type P, c'est-à-dire la zone sous-jacente à la surface A3, on réalise ainsi une tranchée annulaire R3 de silicium poreux. La profondeur de la tranchée R3 sera la plus faible possible afin de minimiser la consommation d'énergie; à titre illustratif, elle sera comprise entre 15 et 40 microns.

Le susbtrat est ensuite placé dans un four d'oxydation de manière à oxyder en profondeur la tranchée R3 de silicium poreux, et ainsi obtenir une tranchée de silicium poreux oxydé R3.

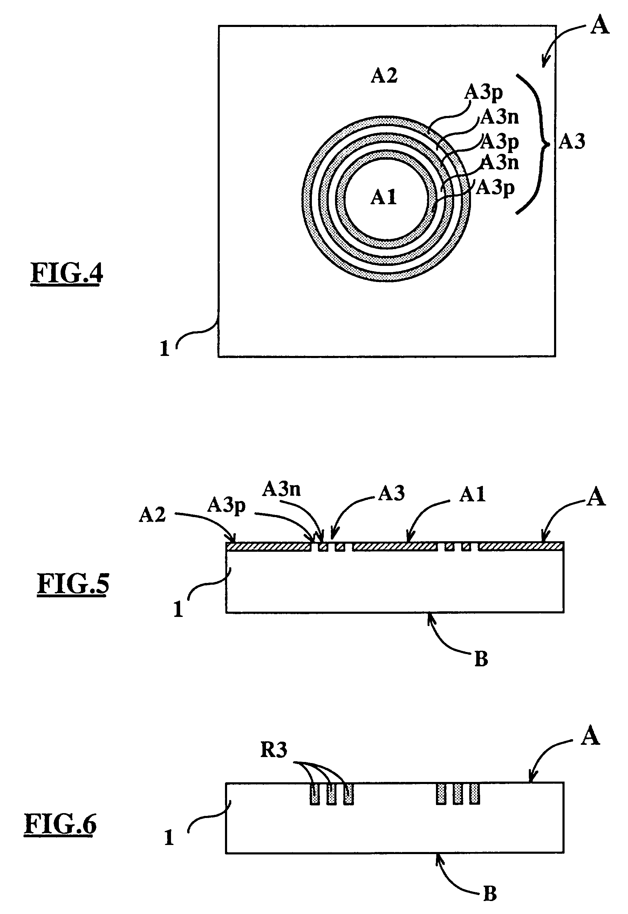

En référence aux figures 4 à 6, on décrit maintenant un second mode de réalisation présentant une différence dans la zone R3 par rapport au mode de réalisation précédent (fig. 1 à 3). On peut voir (fig. 4,5) que la surface annulaire A3 est divisée en surfaces annulaires successives alternativement de type P (référencées A3P) et de type N (référencées A3N), ces dernières étant réalisées par implantation ionique.
Les surfaces A1 et A2 sont bordées de surfaces A3P donc isolantes.
De la même manière que précédemment, la surface A est soumise à une solution d'acide fluorhydrique (HF).
On réalise donc dans cette variante, non pas une mais plusieurs tranchées annulaires R3 en silicium oxydée poreux séparées les unes des autres par du silicium de manière à répartir les contraintes thermiques résultant du procédé de fabrication entre les différentes interfaces Si02/Si pour renforcer la tenue mécanique.

Le nombre de ces tranchées peut être par exemple compris dans une gamme allant de 3 à 5 ( trois tranchées sont seulement représentées sur l'exemple de la figure 6 ).

La réalisation de ces tranchées permet de minimiser les contraintes thermiques aux interfaces entre les zones en silicium et celles en silicium poreux oxydé

La séparation en Si entre chaque tranchée en Si02 est la plus faible possible de manière conserver un bon isolement thermique.

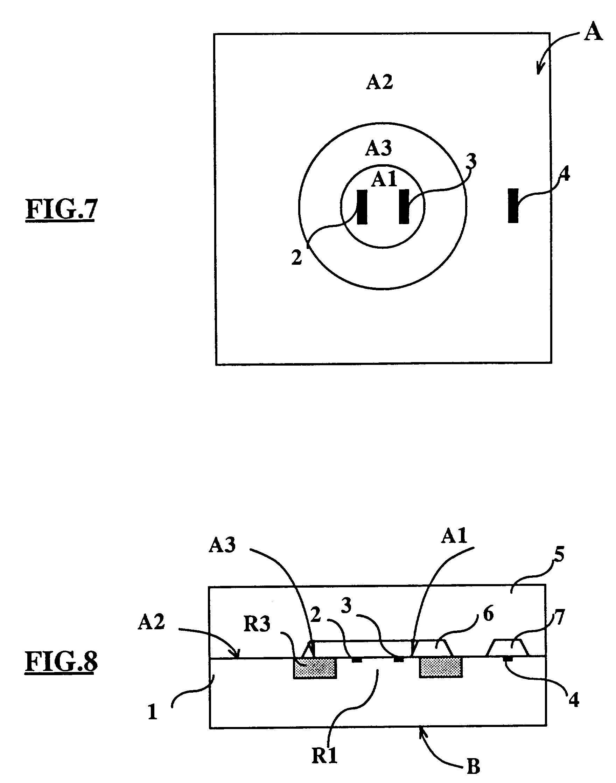

En référence à la figure 7, pour l'un ou l'autre des modes de réalisation précédent, on procède ensuite à l'implantation de l'élément chauffant 2 sur la surface A1 et d'au moins un élément thermométrique 4 sur la surface A2; de préférence, on implantera également au moins un élément thermométrique 3 sur la surface A1.

Le fait que l'élément chauffant et les éléments thermométriques soient distincts sur la surface A1 permet une grande souplesse dans le choix des thermomètres et des méthodes de détection.
De manière avantageuse, les éléments thermométriques sur les surfaces A1 et A2 sont identiques afin d'assurer un même comportement métrologique et de faciliter le traitement des données.

De manière avantageuse, l'élément chauffant et les éléments thermométriques sont réalisés sous la forme de composants (résistances, diodes et/ou transistors ou encore thermopiles) directement implantés dans le substrat de silicium, par exemple en technologie bipolaire ou CMOS.

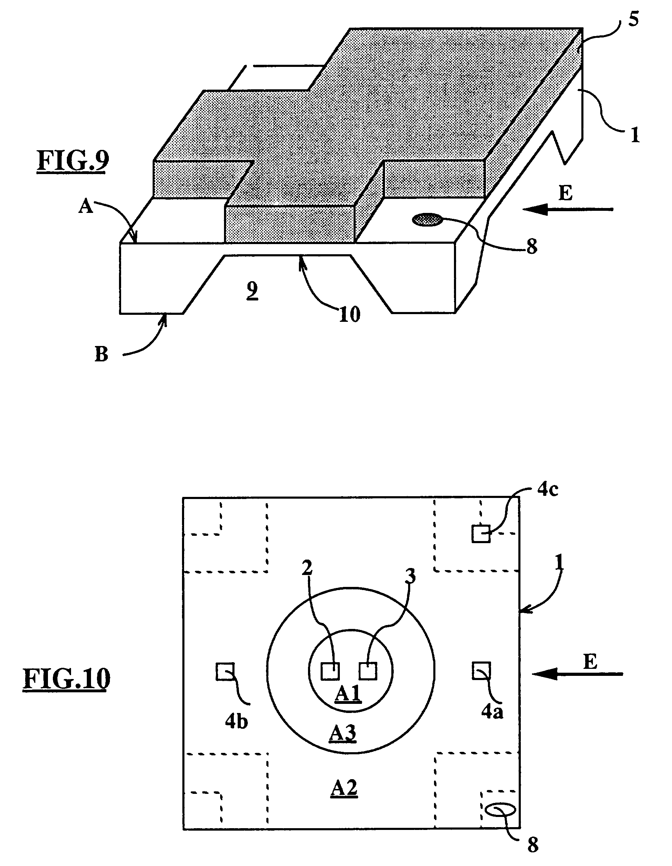

En référence à la figure 8, on voit qu'une fois les éléments thermométriques et chauffant réalisés, un capot 5, préférentiellement en silicium, est fixé de manière étanche sur la première face A du substrat 1. Le capot 5 peut être fixé par l'intermédiaire d'une fine couche de pyrex ou encore par pression à une température comprise entre 200°C et 450°C par l'intermédiaire d'une couche de siloxane (spin on glass) déposée par centrifugation.

Le capot permet, bien sur, la protection de l'élément chauffant et des éléments thermométriques. Mais surtout, il rigidifie et consolide la structure du substrat 1 qui peut alors être usiné de manière à l'adapter à recevoir l'écoulement de fluide au regard de sa seconde face B.

Le capot 5 possède une cavité centrale 6 pratiquée en regard de la première zone R1 et d'une partie de la troisième zone R3. La cavité possédant un contour circulaire, la distance séparant l'interface entre les zones R1 et R3 et le bord de la cavité est égale à environ 70% de la distance séparant les zones R1 et R2.
Une autre cavité 7 est pratiquée dans le capot au regard de l'élément thermométrique. Ces cavités sont soit remplies d'un gaz inerte, par exemple de l'argon, soit sous vide. Grâce au capot qui rigidifie le substrat, ce dernier est usiné de manière à assurer entre les zones R1 et R2 une bonne isolation thermique d'une part, à assurer un bon écoulement du fluide au regard de la seconde face B du substrat, en évitant la formation de turbulences et d'autre part à assurer une parfaite conduction de la chaleur entre les première et seconde faces du substrat 1.

Les figures 9 et 10 représentant schématiquement respectivement en perspective et en vue de dessus une variante de réalisation du capteur conforme à l'invention.

Des connexions extérieures 8 sont prévues pour alimenter l'élément chauffant et les éléments thermométriques.

On voit que dans cette variante, la face A du substrat est munie:
- dans la zone R1 du substrat, d'un élément chauffant 2 et d'un élément thermométrique 3,
- dans la zone R2 du substrat, de trois éléments thermométriques 4a, 4b et 4c, les thermomètres 4a et 4b étant par exemple alignés avec l'axe de l'écoulement E, et disposés de part et d'autre de la zone R1.

Dans cette variante, la face B du substrat est usinée selon des techniques classiques, par exemple par attaque chimique à l'aide d'une solution d'hydroxide de potassium (KOH) de manière à obtenir un évidement 9.
Les trois zones R1, R2, R3 débouchent au même niveau au fond 10 de l'évidement. Dans cette réalisation, le fond 10 de l'évidement 9 prend la forme d'une croix centrée sur la zone R1 et dont une des branches correspond à la direction E de l'écoulement du fluide.

L'évidement 9 laisse subsister une membrane entre la face A et le fond 10 dont l'épaisseur est égale à la profondeur de la troisième zone R3 isolante.

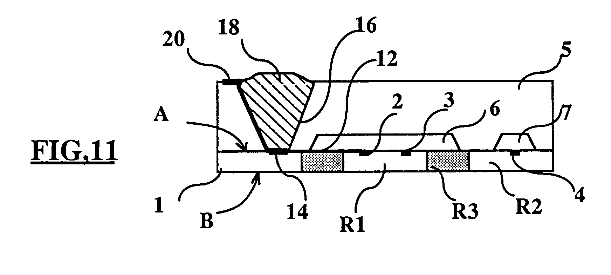

La figure 11 représente schématiquement une coupe d'une variante de réalisation d'un capteur conforme à l'invention. La seconde face B est plane, le substrat étant gravé de manière à obtenir une épaisseur de substrat au plus égale à la profondeur de la tranchée de la troisième zone R3. Un tel usinage n'est possible que grâce à la présence du capot 5 qui empêche la rupture d'une telle membrane

Bien entendu, les éléments thermométriques, et chauffants prévus sur la face A peuvent être identiques à ceux représentées sur la figure 10 précédente.
Chaque élément est relié à au moins une piste conductrice 12 terminée par un plot conducteur 14 déposés sur la face A du substrat. Chaque plot 14 est situé face à une ouverture 16 pratiquée dans le capot 5, par exemple grâce à une attaque chimique au KOH.
La paroi de chaque ouverture 16 peut être métallisée. L'ouverture 16 est remplie de résine conductrice 18 de manière à assurer un contact électrique entre le plot 14 et le plot 20 situé sur le capot 5. On peut ainsi alimenter électriquement les éléments thermométriques et chauffant et aussi lire les signaux électriques délivrés par le capteur.

En résumé, le substrat 1 comporte donc deux faces A et B et se décompose en trois zones, à savoir :
- une première zone R1 essentiellement composée de silicium comportant sur la face A du substrat un élément chauffant 2 et éventuellement au moins un élément thermométrique 3, cette zone R1 formant un court-circuit thermique entre les faces A et B du substrat;
- une deuxième zone R2 essentiellement composée de silicium comportant sur la face A du substrat un ou plusieurs éléments thermomètriques 4, cette zone R2 formant un court-circuit thermique entre les faces A et B du substrat; et
- une troisième zone R3 toute ou en partie en silicium poreux oxydé qui isole thermiquement et électriquement les zones R1 et R2 l'une de l'autre.

Du fait de l'isolation entre les zones R1 et R2 et des court-circuits thermiques existant entre les faces A et B au niveau des zones R1 et R2, l'écoulement du fluide dont on veut mesurer la vitesse peut donc s'effectuer selon la direction E, au regard de la face B du substrat qui est spécialement adaptée à cette fin.

Il en résulte que les éléments implantés dans la face A du substrat 1 n'ont plus à être exposés au fluide qui s'écoule, évitant ainsi les problèmes de contamination ionique au niveau de l'élément chauffant et des thermomètres, contamination qui risque d'affecter la stabilité du capteur; de plus, le région R1 présente un volume de silicium très petit pour une surface en contact avec le fluide qui peut être grande relativement à ce volume dont on peut très bien contrôler la température en agissant sur l'élément chauffant.

Le capteur de débit ainsi décrit peut fonctionner selon deux modes de fonctionnement :
- soit selon la technique de dissipation thermique occasionnée par le fluide en écoulement, ce qui revient par exemple à mesurer la puissance nécessaire pour chauffer la zone R1 tout en maintenant un différentiel de température constant entre les zones R1 et R2 (par exemple une dizaine de dégrés entre les thermomètres 3 et 4c) ;
- soit en mesurant la vitesse de propagation, selon la direction de l'écoulement du fluide, d'une impulsion de chaleur engendrée au niveau de la zone R1, c'est-à-dire, la distance entre les thermomètres 3 et 4a ou 3 et 4b étant connue, il suffit de mesurer le temps entre l'émission de cette impulsion de chaleur au niveau de la zone R1 et la détection de cette impulsion au niveau d'un des thermomètres 4a ou 4b selon la direction de l'écoulement; cette dernière technique présente en outre l'avantage de permettre la détection de la direction de l'écoulement.

## Revendications

1. Capteur de débit comprenant un substrat (1) de silicium possédant une première face (A) et une seconde face (B), ladite première face (A) étant munie d'un élément chauffant (2) disposé dans une première zone (R1) ) dudit substrat (1), d'au moins un élément thermométrique (4) disposé dans une seconde zone (R2) dudit substrat (1), la première et la seconde zone étant isolées l'une de l'autre par une troisième zone (R3) dudit substrat formée au moins en partie de silicium poreux oxydé; chacune desdites première et seconde zones (R1, R2) formant un court-circuit thermique entre les premiére et seconde face (A, B) dudit substrat (1), caractérisé en ce qu'un capot (5) est fixé sur la première face (A) dudit substrat, ce capot possédant au moins une cavité (6) pratiquée en regard de la première zone (R1) et d'au moins une partie de la troisième zone (R3) de manière à rigidifier le substrat (1), la seconde face (B) étant adaptée à recevoir un écoulement de fluide (E) et ladite cavité (6) étant soit sous vide, soit remplie d'un gaz inerte.

2. Capteur selon la revendication 1, caractérisé en ce que la troisième zone (R3) est constituée par au moins une tranchée isolante entourant la première zone (R1).

3. Capteur selon la revendication 2, caractérisé en ce que la première zone (R1) ) est sensiblement cylindrique, la troisième zone (R3) étant annulaire.

4. Capteur selon la revendication 2, caractérisé en ce que la troisième zone (R3) est constituée d'une succession de tranchées en silicium poreux oxydé séparées par du silicium.

5. Capteur selon la revendication 1, caractérisé en ce que l'interface entre la deuxième et la troisième zone (R2, R3) est située hors de la cavité (6).

6. Capteur selon la revendication 1, caractérisé en ce que la première zone (R1) étant sensiblement cylindrique et la troisième zone (R3) étant constituée par au moins une tranchée isolante entourant la première zone, la cavité (6) possède un contour circulaire.

7. Capteur selon la revendication 1, caractérisé en ce que pour recevoir l'écoulement de fluide, le capteur comporte un évidement (9) pratiqué dans la seconde face (B) du substrat (1), les trois zones (R1,R2 et R3) débouchant au même niveau au fond (10) de l'évidement (9).

8. Capteur selon la revendication 7 , caractérisé en ce que l'évidement (9) présente la forme d'une croix centrée sur la premiére zone (R1) ) et dont une des branches correspond à l'axe d'écoulement du fluide (E).

9. Capteur selon la revendication 1, caractérisé en ce que pour recevoir l'écoulement de fluide, la seconde face (B) du substrat (1) est plane, la seconde face (B) du substrat (1) étant gravée de manière à ce que le substrat (1) possède une épaisseur au plus égale à l'épaisseur de la troisième zone (R3).

10. Capteur selon la revendication 1, caractérisé par le fait que le capot (5) est en silicium, la liaison entre le capot (5) et ladite première face (A) se faisant par l'intermédiaire d'une couche de pyrex.

11. Capteur selon la revendication 1, caractérisé par le fait que le capot (5) est en silicium, la liaison entre le capot (5) et ladite première face (A) se faisant par l'intermédiaire d'une couche de siloxane.

12. Capteur selon la revendication 1, caractérisé en ce que la cavité (6) située en regard de la premiére zone (R1) ainsi que toute autre cavité (7) éventuellement pratiquée dans le capot en vis à vis de la premiére face (A) du substrat (1) sont remplies d'un gaz inerte.

13. Capteur selon la revendication 1, caractérisé en ce que la cavité (6) située en regard de la première zone (R1) ainsi que toute autre cavité (7) éventuellement pratiquée dans le capot en vis à vis de la première face (A) du substrat (1) sont sous vide.

14. Capteur selon l'une des revendications précédentes, caractérisé par le fait que la première zone (R1) est en outre munie sur la première face (A) du substrat, d'au moins un élément thermométrique (3).

15. Capteur selon l'une des revendications précédentes, caractérisé par le fait que le substrat (1) de silicium est du type P et que l'élément chauffant (2) et les éléments thermométriques (3,4) sont formés par des composants directement implantés dans la première face (A) dudit substrat.

## Patentansprüche

1. Durchflußsensor mit einem Siliciumsubstrat (1), das eine erste Seite (A) und eine zweite Seite (B) besitzt, wobei die erste Seite (A) mit einem in einer ersten Zone (R1) des Substrats (1) angeordneten Heizelement (2) und wenigstens einem in einer zweiten Zone (R2) des Substrats (1) angeordneten thermometrischen Element (4) versehen ist, wobei die erste und die zweite Zone durch eine dritte Zone (R3) des Substrats gegeneinander isoliert sind, die wenigstens teilweise aus oxidiertem porösen Silicium gebildet ist; wobei die erste sowie die zweite Zone (R1, R2) eine Wärmebrücke zwischen der ersten und der zweiten Seite (A, B) des Substrats (1) bilden, dadurch gekennzeichnet, daß an der ersten Seite (A) des Substrats eine Haube (5) befestigt ist, wobei diese Haube wenigstens einen Hohlraum (6) besitzt, der gegenüber der ersten Zone (R1) und wenigstens einem Teil,der dritten Zone (R2) derart vorgesehen ist, daß das Substrat (1) versteift ist, wobei die zweite Seite (B) zur Aufnahme einer Fluidströmung (E) geeignet ist und der Hohlraum (6) entweder unter Vakuum steht oder mit einem Inertgas gefüllt ist.

2. Sensor nach Anspruch 1, dadurch gekennzeichnet, daß die dritte Zone (R3) durch wenigstens eine isolierende Rinne gebildet ist, die die erste Zone (R1) umgibt.

3. Sensor nach Anspruch 2, dadurch gekennzeichnet, daß die erste Zone (R1) im wesentlichen zylindrisch ist, wobei die dritte Zone (R3) ringförmig ist.

4. Sensor nach Anspruch 2, dadurch gekennzeichnet, daß die dritte Zone (R3) aus einer Folge von Rinnen aus oxidiertem porösen Silicium gebildet ist, die durch Silicium getrennt sind.

5. Sensor nach Anspruch 1, dadurch gekennzeichnet, daß die Grenzfläche zwischen der zweiten und der dritten Zone (R2, R3) außerhalb des Hohlraums (6) liegt.

6. Sensor nach Anspruch 1, dadurch gekennzeichnet, daß die erste Zone (R1) im wesentlichen zylindrisch und die dritte Zone (R3) durch wenigstens eine isolierende Rinne gebildet ist, die die erste Zone umgibt, wobei der Hohlraum (6) einen kreisförmigen Umfang besitzt.

7. Sensor nach Anspruch 1, dadurch gekennzeichnet, daß er zur Aufnahme des Fluidausflusses eine in der zweiten Seite (B) des Substrats (1) vorgesehene Ausnehmung (9) aufweist, wobei die drei Zonen (R1, R2 und R3) auf gleicher Höhe am Boden (10) der Ausnehmung (9) münden.

8. Sensor nach Anspruch 7, dadurch gekennzeichnet, daß die Ausnehmung (9) die Form eines Kreuzes aufweist, das auf die erste Zone (R1) zentriert ist und von dem ein Schenkel der Strömungsachse des Fluids (E) entspricht.

9. Sensor nach Anspruch 1, dadurch gekennzeichnet, daß die zweite Seite (B) des Substrats (1) zur Aufnahme der Fluidströmung eben ist, wobei die zweite Seite (B) des Substrats (1) derart geätzt ist, daß das Substrat (1) eine Dicke besitzt, die höchstens gleich der Dicke der dritten Zone (R3) ist.

10. Sensor nach Anspruch 1, dadurch gekennzeichnet, daß die Haube (5) aus Silicium besteht, wobei die Verbindung zwischen der Haube (5) und der ersten Seite (A) über eine Schicht aus Pyrexglas hergestellt ist.

11. Sensor nach Anspruch 1, dadurch gekennzeichnet, daß die Haube (5) aus Silicium besteht, wobei die Verbindung zwischen der Haube (5) und der ersten Seite (A) über eine Schicht aus Siloxan hergestellt ist.

12. Sensor nach Anspruch 1, dadurch gekennzeichnet, daß der gegenüber der ersten Zone (R1) gelegene Hohlraum (6) sowie jeder andere, möglicherweise in der Haube gegenüber der ersten Seite (A) des Substrats (1) vorgesehene Hohlraum (7) mit einem Inertgas gefüllt ist.

13. Sensor nach Anspruch 1, dadurch gekennzeichnet, daß der gegenüber der ersten Zone (R1) gelegene Hohlraum (6) sowie jeder andere, möglicherweise in der Haube gegenüber der ersten Seite (A) des Substrats (1) vorgesehene Hohlraum (7) unter Vakuum steht.

14. Sensor nach einem der vorhergehenden Ansprüche, dadurch gekennzeichnet, daß die erste Zone (R1) an der ersten Seite (A) des Substrats ferner mit wenigstens einem thermometrischen Element (3) versehen ist.

15. Sensor nach einem der vorhergehenden Ansprüche, dadurch gekennzeichnet, daß das Siliciumsubstrat (1) p-leitend ist und das Heizelement (2) sowie die thermometrischen Elemente (3, 4) durch Bauteile gebildet sind, die direkt in die erste Seite (A) des Substrats implantiert sind.

## Claims

1. A flow rate sensor comprising a silicon substrate (1) ) having a first face (A) and a second face (B), said first place (A) being provided with a heating element (2) disposed in a first region (R1) of said substrate (1) and with at least one thermometer element (4) disposed in a second region (R2) of said substrate (1), said first and second regions being isolated one from another by a third region (R3) of said substrate formed of/or in part by oxidized porous silicon ; said first and second regions (R1, R2) forming a thermal short ciruit between the first and the second faces (A, B) of said substrate (1), characterized in that a cap (5) is fixed on the first face (A) of said substrate (1), said cap having at least one cavity (6) formed facing the first region (R1) and at least a portion of the third region (R3) so as to stiffen the substrate (1), the second face (B) being adapted to receive a flow of fluid (E), and said cavity (6) being either evacuated or filled with an inert gas.

2. A sensor according to claim 1, characterized in that the third region (R3) is constituted by at least one insulating channel surrounding the first region (R1).

3. A sensor according to claim 2, characterized in that the first region (R1) is substantially cylindrical, the third region (R3) being annular in shape.

4. A sensor according to claim 2, characterized in that the third region (R3) is constituted by a succession of oxidized porous silicon channels separated by silicon.

5. A sensor according to claim 1, characterized in that the interface between the second and third regions (R2, R3) lies outside the cavity (6).

6. A sensor according to claim 1, characterized in that the first region (R1) is substantially cylindrical and the third region (R3) being constituted by at least one insulating channel surrounding the first region, said cavity (6) being circular in outline.

7. A sensor according to claim 1, characterized in that to receive the flow of fluid, the sensor includes a recess (9) formed in the second face (B) of said substrate (1), said three regions (R1, R2, and R3) opening out at the same level in the bottom (10) of the recess (9).

8. A sensor according to claim 7, characterized in that the recess (9) is in the form of a cross centered on the first region (R1) with one of its branches corresponding to the flow axis of the fluid (E).

9. A sensor according to claim 1, characterized in that to receive the flow of fluid, the second face (B) of the substrate (1) ) is plane, the second face (B) of the substrate (1) being engraved in such a manner that the thickness of the substrate (1) is less than or equal to the thickness of the third region (R3).

10. A sensor according to claim 1, characterized in that the cap (5) is made of silicon, the bond between the cap (5) and said first face (A) being made via a layer of pyrex.

11. A sensor according to claim 1, characterized in that the cap (5) is made of silicon, the bond between the cap (5) and said first face (A) being made via a layer of siloxane.

12. A sensor according to claim 1, characterized in that the cavity (6) situated facing the first region (R1) and any other cavity (7) that may be formed in the cap facing the first face (A) of the substrate (1) are filled with an inert gas.

13. A sensor according to claim 1, characterized in that the cavity (6) situated facing the first region (R1) and any other cavity (7) that may be formed in the cap facing the first face (A) of the substrate (1) are evacuated.

14. A sensor according to any of the preceding claims, characterized in that the first region (R1) is further provided with at least one thermometer element (3) on the first face (A) of the substrate.

15. A sensor according to any of the preceding claims, characterized in that the silicon substrate (1) is of the P-type and that the heating element (2) and the thermometer elements (3, 4) are constituted by components directly implanted in the first face (A) of said substrate.
